# EUROPEAN PATENT APPLICATION

(11) **EP 4 358 240 A1**
(43) Date of publication of application: **24.04.2024**
(21) Application number: 23200812.8
(22) Date of filing: 29.09.2023
(51) Int. Cl.: H01M 50/103, H01M 50/209, H01M 50/271, H01M 50/691

(54) **BATTERY MODULE**

(30) Priority: 20.10.2022 JP 2022168085
(71) Applicant: Prime Planet Energy & Solutions, Inc., Chuo-ku Tokyo 103-0022 (JP)
(72) Inventor: HIROHATA, Shota, Tokyo, 103-0022 (JP); TANAKA, Iwao, Tokyo, 103-0022 (JP); ABE, Kosyo, Tokyo, 103-0022 (JP); DAIJO, Yoshiko, Tokyo, 103-0022 (JP)
(74) Representative: Kuhnen & Wacker Patent- und Rechtsanwaltsbüro PartG mbB

(57) **Abstract**

A battery module (1) includes: a stack including a plurality of battery cells (11) arranged side by side in a first direction; and a cover member (81) having an insulating property, the cover member (81) being provided to cover the stack from a side opposite to the electrode terminal (16). The cover member (81) includes a first drainage portion (100, 300) located at a center portion of the cover member (81) in a second direction orthogonal to the first direction, and a second drainage portion (500) located at each of both end portions of the cover member (81) in the second direction.

## Description

### CROSS REFERENCE TO RELATED APPLICATIONS

This nonprovisional application is based on Japanese Patent Application No. 2022-168085 filed on October 20, 2022 with the Japan Patent Office, the entire contents of which are hereby incorporated by reference.

### BACKGROUND OF THE INVENTION

### Field of the Invention

The present technology relates to a battery module.

### Description of the Background Art

As indicated in each of Japanese Patent Laying-Open No. 2014-165004, Japanese Patent Laying-Open No. 2011-198713, Japanese Patent Laying-Open No. 2017-059505, WO 2013/179797, Japanese Patent Laying-Open No. 2011-173447, and Japanese Patent No. 6992927, each of a battery module and a battery pack is conventionally provided with a drainage portion for draining dew condensation water accumulated on a bottom portion thereof.

### SUMMARY OF THE INVENTION

A battery module used for a vehicle or the like may be inclined due to an external environment. Even in that case, it is required to drain dew condensation water or the like smoothly.

It is an object of the present technology to provide a battery module to drain dew condensation water or the like accumulated on a bottom-portion cover smoothly even when the battery module is inclined.

The present technology provides the following battery module.
[1] A battery module comprising: a stack including a plurality of battery cells arranged side by side in a first direction, each of the plurality of battery cells having a housing with a prismatic shape and an electrode terminal provided on the housing; a restraint member that restrains the stack along the first direction, the restraint member being provided to be arranged side by side with the plurality of battery cells in a second direction orthogonal to the first direction; and a cover member having an insulating property, the cover member being provided to cover the stack from a side opposite to the electrode terminal in a third direction orthogonal to the first direction and the second direction, wherein the cover member includes a first drainage portion located at a center portion of the cover member in the second direction, and a second drainage portion located at each of both end portions of the cover member in the second direction.
[2] The battery module according to [1], wherein at least one of the first drainage portion and the second drainage portion is provided with a through hole provided in the cover member.
[3] The battery module according to [2], wherein a flange portion that protrudes opposite to the stack is formed at an edge of the through hole.
[4] The battery module according to [2] or [3], further comprising a biasing portion that biases the stack in a direction away from the cover member, the biasing portion being provided at an edge of the through hole.
[5] The battery module according to any one of [1] to [4], wherein at least one of the first drainage portion and the second drainage portion is provided with a groove portion provided at an end portion of the cover member in the first direction.
[6] The battery module according to any one of [1] to [5], wherein the cover member has an inclined surface that is inclined, in a direction away from the stack, toward the first drainage portion located at the center portion in the second direction.
[7] The battery module according to any one of [1] to [6], wherein the stack further includes a case that accommodates the plurality of battery cells, that supports the plurality of battery cells in at least the first direction, and that forms a unit including the plurality of battery cells.
[8] The battery module according to [7], wherein the unit includes two or more battery cells, and each of the two or more battery cells has an output density of 8000 W/L or more.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a first perspective view showing a battery module.
Fig. 2 is a second perspective view showing the battery module.
Fig. 3 is an exploded assembly diagram showing the battery module.
Fig. 4 is a perspective view showing a battery cell unit included in the battery module.
Fig. 5 is a perspective view showing a battery cell included in the battery cell unit.
Fig. 6 is a perspective view showing a bottom-portion cover body.
Fig. 7 is a top view showing the bottom-portion cover body.
Fig. 8 is a cross sectional view along VIII-VIII in Fig. 7.
Fig. 9 is an enlarged perspective view of a drainage hole (first drainage portion) provided in a center portion of the bottom-portion cover body in an X axis direction.
Fig. 10 is a cross sectional view along X-X in Fig. 7.
Fig. 11 is a cross sectional view along XI-XI in Fig. 7.
Fig. 12 is an enlarged perspective view of a groove portion (second drainage portion) provided at an end portion of the bottom-portion cover body in a Y axis direction.
Fig. 13 is a diagram showing a state in which the battery module is inclined.
Fig. 14 is a diagram showing a state in which the battery module is biased toward a reference plane.
Fig. 15 is a diagram showing a state in which the battery module is moved toward the bottom-portion cover body against a biasing force.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "battery" is not limited to a lithium ion battery, and may include other batteries such as a nickel-metal hydride battery and a sodium ion battery. In the present specification, the term "electrode" may collectively represent a positive electrode and a negative electrode.

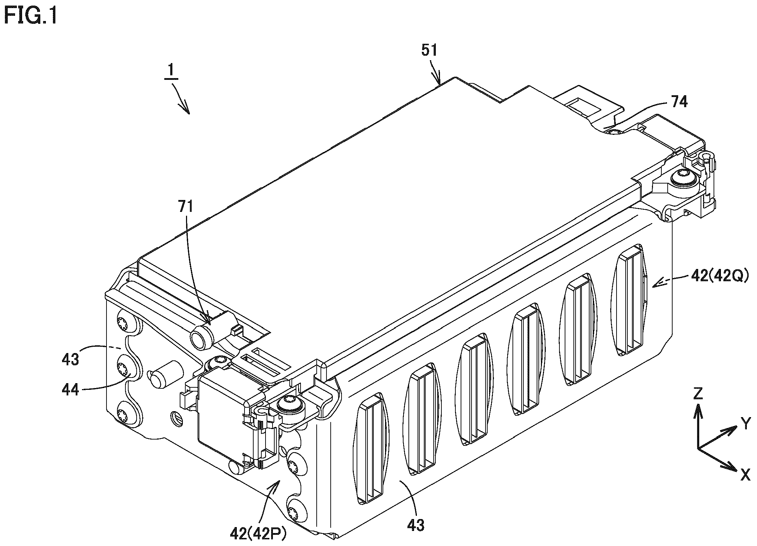

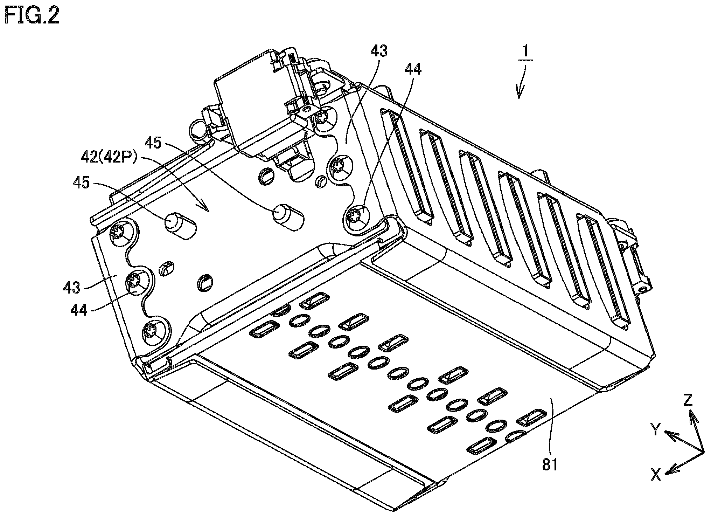

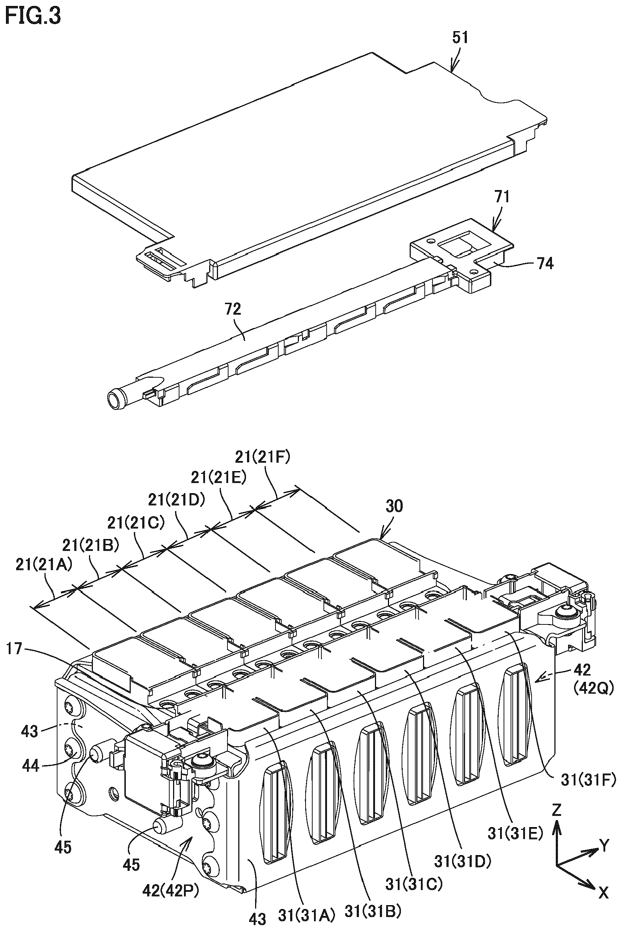

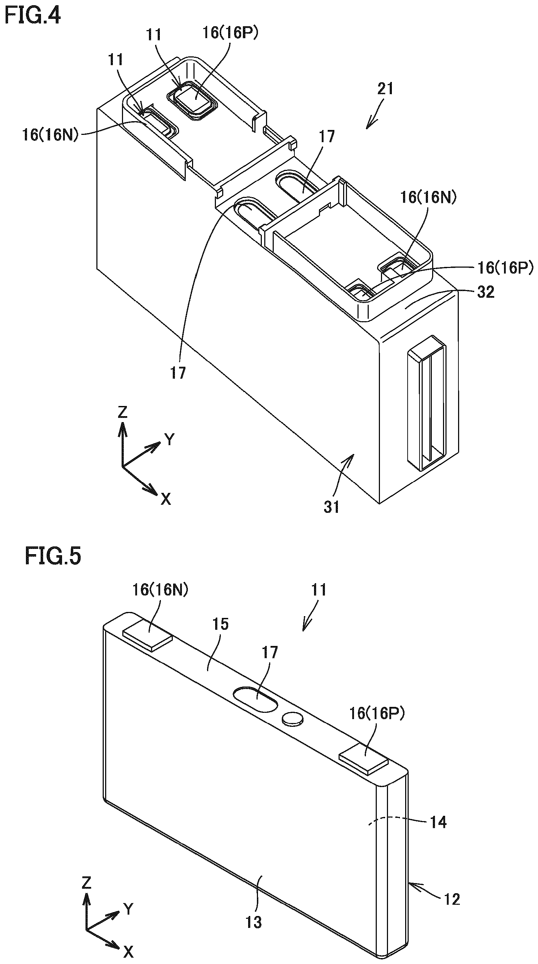

Each of Figs. 1 and 2 is a perspective view showing a battery module according to an embodiment of the present invention. Fig. 3 is an exploded assembly diagram showing the battery module in each of Figs. 1 and 2. Fig. 4 is a perspective view showing a battery cell unit included in the battery module in Fig. 1. Fig. 5 is a perspective view showing a battery cell included in the battery cell unit in Fig. 1.

Referring to Figs. 1 to 5, a battery module 1 is used as a power supply for driving a vehicle such as a hybrid electric vehicle (HEV), a plug-in hybrid electric vehicle (PHEV), or a battery electric vehicle (BEV).

In the present specification, for convenience of description of the structure of battery module 1, the "Y axis" represents an axis extending in parallel with a stacking direction of a plurality of below-described battery cells 11, the "X axis" represents an axis extending in a direction orthogonal to the Y axis, and the "Z axis" represents an axis extending in a direction orthogonal to the Y axis and the X axis. An obliquely rightward upward direction in the plane of sheet of Fig. 1 is "+Y axis direction", and an obliquely leftward downward direction in the plane of sheet of Fig. 1 is "-Y axis direction". An obliquely rightward downward direction in the plane of sheet of Fig. 1 is "+X axis direction" and an obliquely leftward upward direction in the plane of sheet of Fig. 1 is "-X axis direction". An upward direction in the plane of sheet of Fig. 1 is "+Z axis direction" and a downward direction in the plane of sheet of Fig. 1 is "-Z axis direction". Typically, battery module 1 is mounted on a vehicle in such a posture that the +Z axis direction corresponds to the upward direction and the -Z axis direction corresponds to the downward direction.

First, an overall structure of battery module 1 will be described. As shown in Fig. 3, battery module 1 has a plurality of battery cell units 21 (21A, 21B, 21C, 21D, 21E, 21F).

The plurality of battery cell units 21 are arranged side by side in the Y axis direction. Battery cell unit 21A, battery cell unit 21B, battery cell unit 21C, battery cell unit 21D, battery cell unit 21E, and battery cell unit 21F are arranged side by side in this order from the negative side to the positive side in the Y axis direction. It should be noted that the number of battery cell units 21 included in battery module 1 is not particularly limited as long as two or more battery cell units 21 are included.

As shown in Figs. 4 and 5, each of battery cell units 21, i.e., each of battery cell units 21A to 21F includes a plurality of battery cells 11 and a case body 31.

In each battery cell unit 21, two battery cells 11 are arranged side by side continuously in the Y axis direction. It should be noted that the number of battery cells 11 included in each battery cell unit 21 is not particularly limited as long as a plurality of battery cells 11 are included.

Each of battery cells 11 is a lithium ion battery. As an example, battery cell 11 can have an output density of 8000 W/L or more. Battery cell 11 has a prismatic shape. More specifically, battery cell 11 has a thin plate shape in the form of a rectangular parallelepiped. The plurality of battery cells 11 are stacked such that the Y axis direction corresponds to the thickness direction of each battery cell 11.

Each of battery cells 11 has an exterior package 12. Exterior package 12 is constituted of a housing having a rectangular parallelepiped shape, and forms the external appearance of battery cell 11. An electrode assembly and an electrolyte solution are accommodated in exterior package 12.

Exterior package 12 has a cell side surface 13, a cell side surface 14, and a cell top surface 15. Each of cell side surface 13 and cell side surface 14 is constituted of a flat surface orthogonal to the Y axis direction. Cell side surface 13 and cell side surface 14 are oriented oppositely in the Y axis direction. Each of cell side surface 13 and cell side surface 14 has the largest area among the areas of the plurality of side surfaces of exterior package 12. Cell top surface 15 is constituted of a flat surface orthogonal to the Z axis direction. Cell top surface 15 is oriented in the +Z axis direction.

Battery cell 11 further has a gas-discharge valve 17. Gas-discharge valve 17 is provided in cell top surface 15. Gas-discharge valve 17 is provided at the center portion of cell top surface 15 in the X axis direction. When internal pressure of exterior package 12 becomes more than or equal to a predetermined value due to gas generated inside exterior package 12, gas-discharge valve 17 discharges the gas to the outside of exterior package 12. The gas from gas-discharge valve 17 flows through a below-described duct 71 and is discharged to the outside of battery module 1.

Battery cell 11 further has electrode terminals 16 including a pair of a positive electrode terminal 16P and a negative electrode terminal 16N. Electrode terminals 16 are provided on cell top surface 15. Positive electrode terminal 16P and negative electrode terminal 16N are provided on both sides with gas-discharge valve 17 being interposed therebetween in the X axis direction.

Case body 31 has a rectangular parallelepiped appearance. Case body 31 is composed of a resin. In each battery cell unit 21, case body 31 accommodates a plurality of battery cells 11. Case body 31 has a case top portion 32. Case top portion 32 has a wall shape having a thickness direction corresponding to the Z axis direction with case top portion 32 being disposed in parallel with the X-Y axes plane.

As shown in Figs. 3 and 4, the plurality of battery cells 11 are stacked in the Y axis direction (first direction) across battery cell units 21A to 21F arranged side by side in the Y axis direction. The plurality of battery cells 11 are stacked such that cell side surfaces 13 of battery cells 11 adjacent to each other in the Y axis direction face each other and cell side surfaces 14 of battery cells 11 adjacent to each other in the Y axis direction face each other. Thus, positive electrode terminals 16P and negative electrode terminals 16N are alternately arranged in the Y axis direction in which the plurality of battery cells 11 are stacked. Positive electrode terminal 16P and negative electrode terminal 16N adjacent to each other in the Y axis direction are connected to each other by a bus bar (not shown). Thus, the plurality of battery cells 11 are electrically connected together in series.

As shown in Figs. 1 to 3, battery module 1 further has a pair of end plates 42 (42P, 42Q) and a pair of binding bars 43 (restraint members). The pair of binding bars 43 and the pair of end plates 42 collectively hold the plurality of battery cell units 21 (the plurality of battery cells 11) arranged side by side in the Y axis direction.

The pair of end plates 42 are disposed at both ends beside the plurality of battery cells 11 (the plurality of battery cell units 21) in the Y axis direction. End plate 42P faces battery cell unit 21A in the Y axis direction, and end plate 42Q faces battery cell unit 21F in the Y axis direction.

The pair of binding bars 43 are disposed at both ends of the stack of battery cells 11 in the X axis direction (second direction). That is, the pair of bind bars 43 are provided to be arranged side by side with the plurality of battery cell units 21 and end plates 42 in the X axis direction. Each of binding bars 43 extends in the Y axis direction. An end portion of binding bar 43 in the -Y axis direction is connected to end plate 42P by a bolt 44. An end portion of binding bar 43 in the +Y axis direction is connected to end plate 42Q by a bolt 44. The pair of binding bars 43 and the pair of end plates 42 apply a restraint force in the Y axis direction onto the plurality of battery cells 11 (the plurality of battery cell units 21). It should be noted that a retainer may be further provided which extends in the X axis direction with the retainer intersecting a below-described duct 71 and which is connected to the pair of binding bars 43 at both end portions thereof.

Stud bolts 45 are attached to end plates 42. Battery module 1 is fixed to a supporting mechanism (such as a pack case) via stud bolts 45.

Battery module 1 further has duct 71 and a cover body 51.

Duct 71 is composed of a resin such as polybutylene terephthalate resin (PBT resin). Duct 71 extends in the Y axis direction with duct 71 facing the plurality of battery cells 11 (the plurality of battery cell units 21) in the Z axis direction (third direction). Duct 71 is an elongated body extending in the Y axis direction. Duct 71 forms a path through which gas discharged from each of the plurality of battery cells 11 flows. Duct 71 is attached to an attachment-target member 30. Attachment-target member 30 is a member held by battery cells 11, and, in the present embodiment, is constituted of the plurality of case bodies 31 arranged side by side in the Y axis direction.

Cover body 51 is composed of a resin. Cover body 51 is provided to cover the plurality of battery cells 11 in the Z axis direction. Cover body 51 is provided to face case top portions 32 of case bodies 31 in the Z axis direction. Cover body 51 is provided to further cover duct 71.

A bottom-portion cover body 81 (cover member) shown in Fig. 2 is an insulating member composed of a resin having an insulating property. Bottom-portion cover body 81 is provided to cover the plurality of battery cells 11 in the Z axis direction. Bottom-portion cover body 81 is provided to face a bottom portion (opposite to case top portion 32) of case body 31 in the Z axis direction. By providing bottom-portion cover body 81 having the insulating property, the insulating property of battery module 1 on the bottom portion side can be improved.

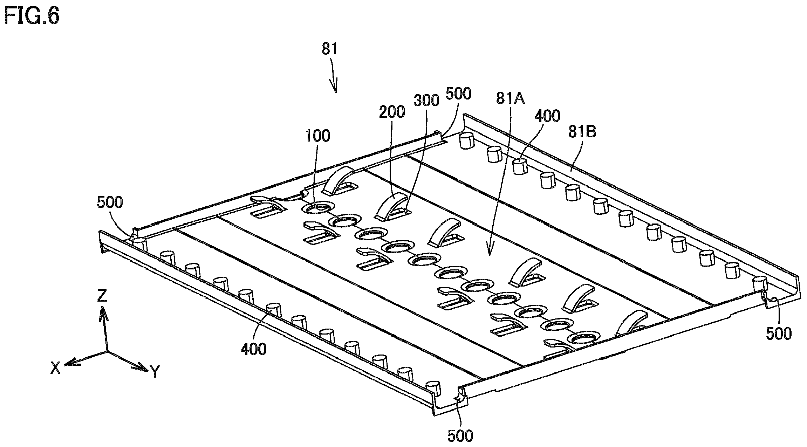

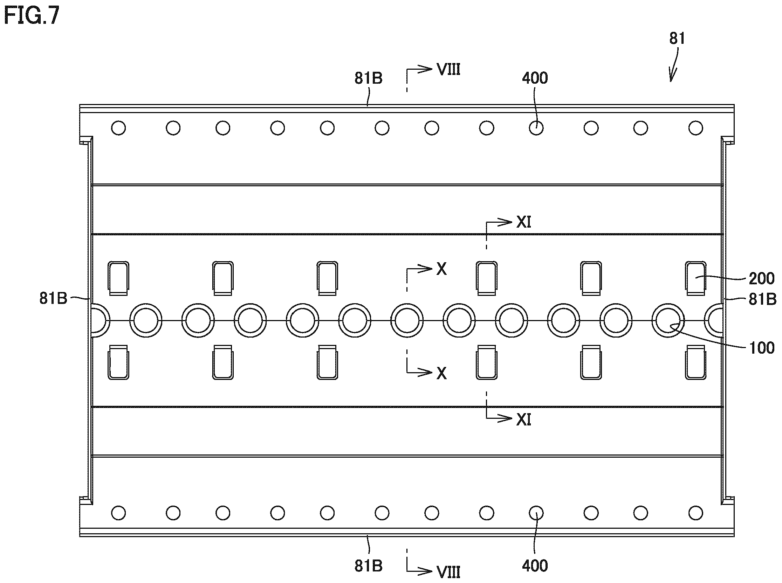

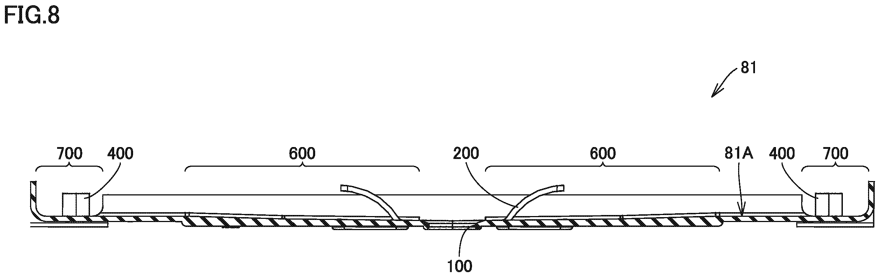

Fig. 6 is a perspective view showing bottom-portion cover body 81. Fig. 7 is a top view showing bottom-portion cover body 81. Fig. 8 is a cross sectional view along VIII-VIII in Fig. 7.

As shown in Figs. 6 to 8, bottom-portion cover body 81 (cover member) has a bottom surface 81A and wall surface portions 81B. Each of wall surface portions 81B is provided to extend, upward and substantially perpendicularly to bottom surface 81A, from an outer peripheral portion of bottom surface 81A. Bottom surface 81A and wall surface portions 81B are typically formed by integral molding using a resin.

Bottom-portion cover body 81 is provided with: through holes 100 provided at the center in the X axis direction; plate springs 200 and through holes 300 provided on both sides in the X axis direction with respect to through holes 100; protuberances 400 provided at both end portions in the X axis direction; and groove portions 500 provided in corner portions at four corners thereof.

Through holes 100, 300 are provided in a region 600 of bottom-portion cover body 81 on the center side in the X axis direction (second direction). Through holes 100, 300 constitute a "first drainage portion" located at the center portion of bottom-portion cover body 81 in the X axis direction. Groove portions 500 are provided in regions 700 at the end portions of bottom-portion cover body 81 in the X axis direction (second direction). Groove portions 500 constitute a "second drainage portion" located at each of the end portions (four corners) of bottom-portion cover body 81 in the X axis direction and the Y axis direction. A liquid such as dew condensation water accumulated on bottom surface 81A of bottom-portion cover body 81 is drained from bottom-portion cover body 81 via through holes 100, 300 and groove portions 500.

In region 600, bottom surface 81A of bottom-portion cover body 81 has an inclined surface that is inclined downward (-Z axis direction) toward through holes 100 located at the center in the X axis direction. Thus, when battery module 1 is installed horizontally as a whole, the liquid accumulated on region 600 is likely to flow toward through holes 100, thereby promoting drainage of the liquid. It should be noted that the formation of the inclined surface described above is not an essential configuration in the present technology.

In an example, each of through holes 100 is a circular hole having a diameter of about 7 mm, each of through holes 300 is a quadrangular hole of about 6 mm (Y axis direction) × 8 mm (X axis direction), and each of groove portions 500 has a width (X axis direction) of about 10 mm. It should be noted that the shapes and sizes of through holes 100, 300 and groove portion 500 are not limited to those described above, and can be changed appropriately.

Each of protuberances 400 provided in regions 700 has a substantially circular cross sectional shape as an example, but may have a cross sectional shape different from the substantially circular cross sectional shape, such as a substantially polygonal cross sectional shape. With protuberance 400 having the substantially circular cross sectional shape, resistance against flow of the liquid such as dew condensation water drained from region 700 via groove portion 500 can be reduced.

In the present embodiment, as an example, six sets of plate springs 200 and twelve sets of protuberances 400 are provided for six battery cell units 21 in the Y axis direction. The number and arrangement of plate springs 200 and protuberances 400 can be changed appropriately.

The size of each of protuberances 400 can also be changed appropriately. As an example, the diameter (for example, about 4 mm) and shape (circular shape) of top surface 400A can be set to avoid plastic deformation of case body 31 of battery cell unit 21 even under application of a predetermined load (for example, 120 N).

Each of plate springs 200 (biasing portion) biases the stack in a direction away from bottom-portion cover body 81 (+Z axis direction). Plate spring 200 may be formed in one piece with bottom surface 81A and wall surface portions 81B of bottom-portion cover body 81 by integral molding, or may be formed as a separate member and attached thereto. Plate spring 200 is provided at a position overlapping with through hole 300 in the Z axis direction. Plate spring 200 is formed to extend upward from an edge of through hole 300. Plate springs 200 and through holes 300 are symmetrically provided with respect to the center of bottom-portion cover body 81 in the X axis direction.

The plurality of through holes 100 are formed side by side along the Y axis direction and the plurality of through holes 300 are formed side by side along the Y axis direction. Each through hole 100 and each through hole 300 are formed at positions displaced from each other in the Y axis direction. That is, through holes 100, 300 are arranged in a zigzag manner.

A specification of bottom-portion cover body 81 can be changed appropriately. In an example, the material (hardness) of bottom-portion cover body 81, the thickness of bottom surface 81A, the diameter of each through hole 100, and the like are set to avoid a predetermined test finger from being brought into contact with battery cell 11 when the test finger is pressed into through hole 100 in accordance with a method compliant with, for example, JISC 0920.

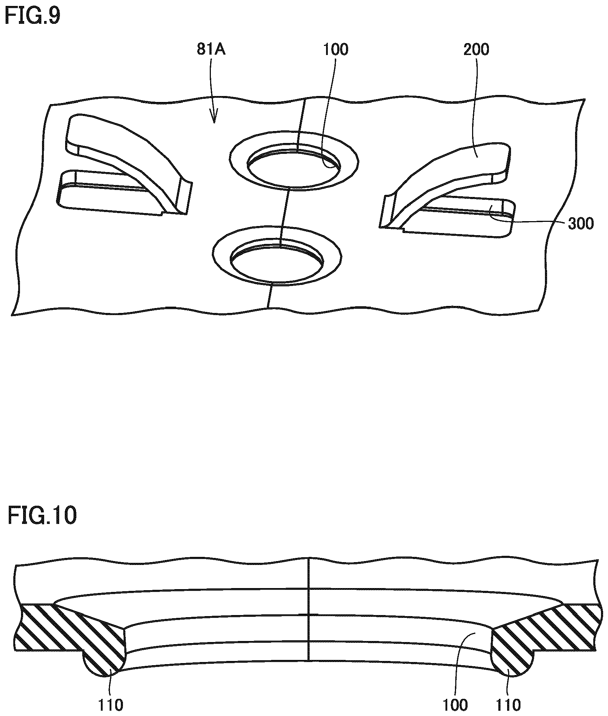

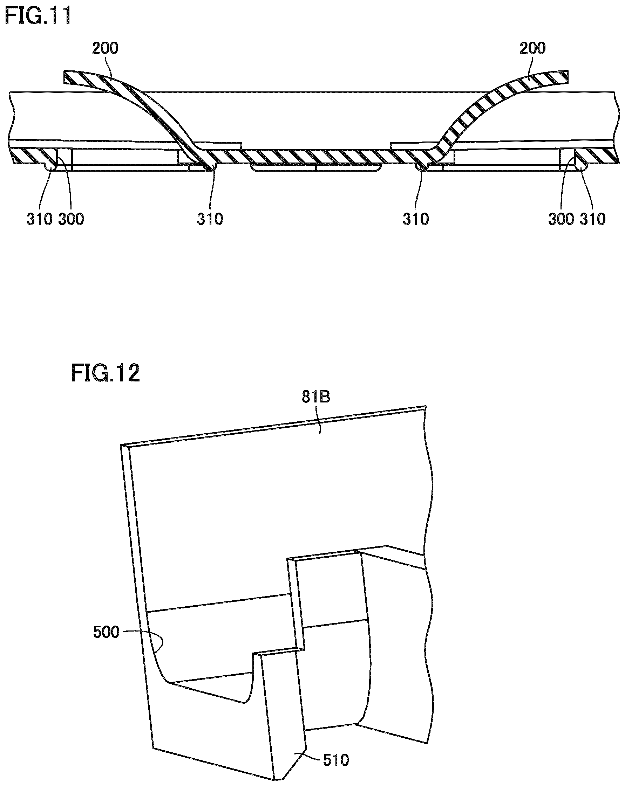

Fig. 9 is an enlarged perspective view showing surroundings around through holes 100, 300 in bottom-portion cover body 81. Fig. 10 is a cross sectional view along X-X in Fig. 7 and Fig. 11 is a cross sectional view along XI-XI in Fig. 7. Fig. 12 is an enlarged perspective view of each groove portion 500.

As shown in Figs. 10 and 11, flange portions 110, 310 each protruding downward (opposite to battery cells 11) are formed at edges of through holes 100, 300, respectively. As shown in Fig. 12, also in groove portion 500, a flange portion 510 protruding downward with respect to groove portion 500 is formed. Since flange portions 110, 310, 510 are formed, dissipation of the liquid (suppression of adhesion of the liquid in the drainage portion) can be promoted when draining the liquid via through holes 100, 300 and groove portions 500.

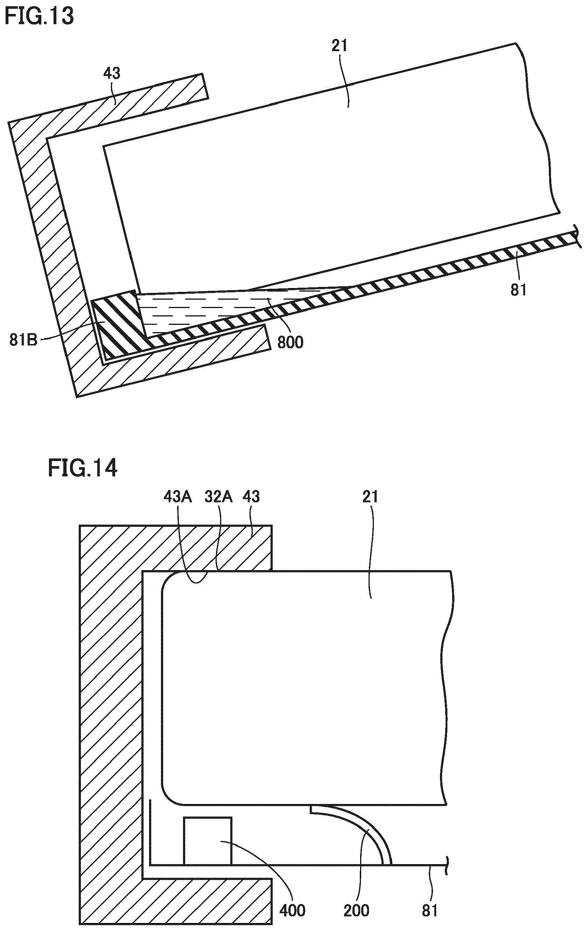

When battery module 1 is used for a vehicle, a ship, or the like, battery module 1 may be inclined due to an external environment. When battery module 1 is inclined, liquid 800 is brought to an end portion of bottom-portion cover body 81 in the X axis direction as shown in Fig. 13. Liquid 800 having been brought to the end portion flows along wall surface portion 81B in the Y axis direction, and is drained from bottom-portion cover body 81 via groove portion 500 provided at the end portion in the Y axis direction.

Thus, in battery module 1 according to the present embodiment, even when battery module 1 is inclined due to an external environment, dew condensation water or the like can be drained smoothly.

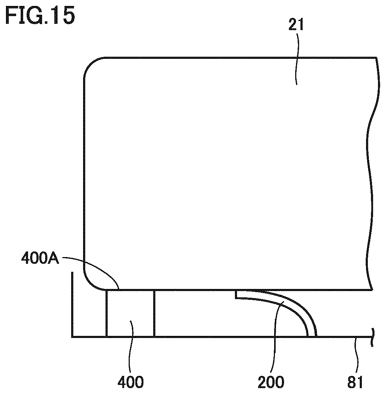

Fig. 14 is a diagram showing a state in which battery module 1 is biased upward. Fig. 15 is a diagram showing a state in which battery module 1 is moved downward.

As shown in Fig. 14, plate spring 200 biases battery cell unit 21 including the plurality of battery cells 11 upward. Battery cell unit 21 biased by plate spring 200 is pressed against binding bar 43. More specifically, binding bar 43 has an facing surface 43A (facing portion) that faces case top portion 32 of case body 31, and battery cell unit 21 is biased by plate spring 200 to bring case top portion 32 of case body 31 into abutment with facing surface 43A of binding bar 43. Here, facing surface 43A of binding bar 43 serves as a reference plane for positioning the plurality of battery cell units 21 in the Z axis direction.

Thus, in battery module 1, by plate springs 200 and binding bars 43, the plurality of battery cell units 21 can be precisely positioned in the Z axis direction. In particular, a simple and precise positioning method can be provided in a step of stacking the plurality of battery cell units 21 and restraining them in the Y axis direction.

As described above, bottom-portion cover body 81 includes protuberances 400 each protruding toward battery cell unit 21. Protruding heights of the plurality of protuberances 400 are substantially the same. Part of the plurality of protuberances 400 may have a different height.

When battery module 1 is vibrated due to an external environment to move each of battery cell units 21 downward (direction toward bottom-portion cover body 81) against the biasing force of each plate spring 200, top surface 400A of each protuberance 400 is brought into abutment with the stack of battery cell units 21 to support the stack of battery cell units 21 as shown in Fig. 15, thereby suppressing each of battery cell units 21 from being too close to bottom-portion cover body 81. After the application of external force due to the vibration ceases, battery cell unit 21 is pressed against facing surface 43A of binding bar 43 by the biasing force of plate spring 200, thereby returning to the state shown in Fig. 14. Thus, even when battery module 1 is vibrated, the battery cell can be precisely positioned.

Thus, in battery module 1 according to the present embodiment, even when battery module 1 is inclined, dew condensation water or the like accumulated on bottom-portion cover body 81 can be drained smoothly, and even when battery module 1 is vibrated, the stack of the plurality of battery cell units 21 can be precisely positioned.

Further, in battery module 1, by forming battery cell units 21 that each accommodate the plurality of battery cells 11 in case body 31 with the plurality of battery cells 11 being arranged side by side in the Y axis direction and by forming battery module 1 by arranging the plurality of battery cell units 21 side by side in the Y axis direction, a manufacturing process can be simplified as compared with a case where battery module 1 is manufactured based on each of the plurality of battery cells 11 as one unit.

In battery module 1, by forming battery cell units 21 that each accommodate the plurality of battery cells 11 in case body 31, battery module 1 can be readily disassembled or replaced based on each battery cell unit 21 as a unit.

In battery module 1, by forming battery cell units 21 that each accommodate the plurality of battery cells 11 in case body 31, battery module 1 can be divided based on each battery cell unit 21 as one unit in order to lower the voltage to be handled when discarding battery module 1. Therefore, battery module 1 can be readily discarded.

In battery module 1, since two or more battery cells 11 are included in one unit and each of two or more battery cells 11 is set to have an output density of about 8000 W/L or more, a power supply device having a predetermined voltage or higher can be formed based on each unit.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A battery module (1) comprising:
a stack including a plurality of battery cells (11) arranged side by side in a first direction, each of the plurality of battery cells (11) having a housing (12) with a prismatic shape and an electrode terminal (16) provided on the housing (12);
a restraint member (43) that restrains the stack along the first direction, the restraint member (43) being provided to be arranged side by side with the plurality of battery cells (11) in a second direction orthogonal to the first direction; and
a cover member (81) having an insulating property, the cover member (81) being provided to cover the stack from a side opposite to the electrode terminal (16) in a third direction orthogonal to the first direction and the second direction, wherein
the cover member (81) includes a first drainage portion (100, 300) located at a center portion of the cover member (81) in the second direction, and a second drainage portion (500) located at each of both end portions of the cover member (81) in the second direction.

2. The battery module (1) according to claim 1, wherein at least one of the first drainage portion (100, 300) and the second drainage portion (500) is provided with a through hole (100, 300) provided in the cover member (81).

3. The battery module (1) according to claim 2, wherein a flange portion (110, 310) that protrudes opposite to the stack is formed at an edge of the through hole (100, 300).

4. The battery module (1) according to claim 2 or 3, further comprising a biasing portion (200) that biases the stack in a direction away from the cover member (81), the biasing portion (200) being provided at an edge of the through hole (300).

5. The battery module (1) according to any one of claims 1 to 4, wherein at least one of the first drainage portion (100, 300) and the second drainage portion (500) is provided with a groove portion provided at an end portion of the cover member (81) in the first direction.

6. The battery module (1) according to any one of claims 1 to 5, wherein the cover member (81) has an inclined surface that is inclined, in a direction away from the stack, toward the first drainage portion (100, 300) located at the center portion in the second direction.

7. The battery module (1) according to any one of claims 1 to δ, wherein the stack further includes a case (31) that accommodates the plurality of battery cells (11), that supports the plurality of battery cells (11) in at least the first direction, and that forms a unit (21) including the plurality of battery cells.

8. The battery module (1) according to claim 7, wherein the unit (21) includes two or more battery cells (11), and each of the two or more battery cells (11) has an output density of 8000 W/L or more.
